Europäisches Patentamt

European Patent Office

Office européen des brevets

(11) Veröffentlichungsnummer : **0 081 179 B1**

# EUROPÄISCHE PATENTSCHRIFT

(45) Veröffentlichungstag der Patentschrift :
30.07.86

(51) Int. Cl.⁴ : **G 02 C   1/02**

(21) Anmeldenummer : **82111026.9**

(22) Anmeldetag : **29.11.82**

(54) **Randlose Brille.**

(30) Priorität : **05.12.81 DE 3148166**
**27.10.82 DE 3239700**

(43) Veröffentlichungstag der Anmeldung :
**15.06.83 Patentblatt 83/24**

(45) Bekanntmachung des Hinweises auf die Patenterteilung : **30.07.86 Patentblatt 86/31**

(84) Benannte Vertragsstaaten :
**AT CH DE FR GB IT LI**

(56) Entgegenhaltungen :
**GB-A-   133 930**
**US-A- 1 358 200**

(73) Patentinhaber : **Hafner, Klaus**
**Knappenweg 7b**
**D-7000 Stuttgart 1 (DE)**

(72) Erfinder : **Hafner, Klaus**
**Knappenweg 7b**
**D-7000 Stuttgart 1 (DE)**

(74) Vertreter : **Thul, Leo, Dipl.-Phys.**
**Kurze Strasse 8 Postfach 300 929**
**D-7000 Stuttgart.30 (DE)**

## Beschreibung

Die Erfindung bezieht sich auf eine randlose Brille, d. h. auf eine Brille, bei der die Bügel und die Nasenbrücke direkt an den Gläsern befestigt sind ; der übliche Tragebalken für diese Brillenteile entfällt also. Bei derartigen Brillen ist es üblich, die Bügel und die Nasenbrücke mit den Gläsern zu verschrauben. Hierzu sind also Bohrungen in den Gläsern erforderlich, die bei einfachen Gläsern auch relativ problemlos ausgeführt werden können. Teure Gläser, z. B. phototrope oder Bifokal-Gläser sind aber sehr hart und damit nur sehr schwierig zu durchbohren ; jedenfalls ist die Gefahr, daß die Gläser bei dem Bohrvorgang zerspringen sehr groß, ein Risiko, das der Optiker nicht gerne eingehen möchte. Damit sind also teure Gläser für die Verwendung in randlosen Brillen praktisch ausgeschlossen.

Hier will nun die Erfindung Abhilfe schaffen, indem eine Lösung vorgeschlagen wird, die Bohrungen in den Gläsern vermeidet. Es ist bekannt, einen Teil der festen Gläserfassung durch ein Spannband oder einen Spanndraht zu ersetzen und die Brillengestelle so zu gestalten, daß ein oberer starrer Tragebalken vorgesehen ist, der zur Aufnahme der oberen Glaseinfassung dient ; um die unteren Ränder der Gläser sind Spannbänder bzw. Spanndrähte herumgelegt, deren Enden am Nasenbügel und an den Backenverbindungen in geeigneter Weise befestigt sind. Brillengestelle derartiger Ausgestaltung sind beispielsweise in den DE-ASen 11 08 942, 10 47 476 beschrieben. Alle diese bekannten Brillengestelle weisen also für die Fassung bzw. Halterung der Gläser zwei unterschiedliche Bauteile auf : den starren Tragbalken für den oberen Rand und das elastische Band bzw. Draht für den unteren Rand des Glases (es kann auch umgekehrt sein).

Damit wird selbstverständlich der Gesamteindruck des Brillengestells beeinflußt, und man hat jedenfalls nicht die ideale randlose Brille, wie es bei Brillen der Fall ist, bei denen die Gläser durch Bohrungen im Brillenglas direkt mit den Brillenbügeln und der Nasenbrücke verbunden sind. Auch hier schafft die Erfindung Abhilfe, ohne daß Bohrungen bzw. Verschraubungen erforderlich sind.

In der DE-AS-12 27 691 ist zwar eine Brille ohne Einfassung beschrieben, bei der keine Bohrungen in den Gläsern erforderlich sind ; es ist aber auch hier ein Tragbalken vorgesehen, und die Gläser werden durch einen biegsamen Faden gehalten. Zur Verbindung von Gläsern und Tragebalken sind Haltemittel nötig, die das Brillengestell so verunschönen, daß besondere Zierverblendungen angebracht werden.

Es ist ferner schon aus der DE-PS-923 812 eine randlose Brille bekannt geworden, bei der keine Tragbalken für die Gläser vorgesehen sind ; es wird zur Halterung des Augenglases an der Brücke eine Glasklammer verwendet, deren Schenkel das Augenglas umfassen. Durch geeignete Bohrungen in den Schenkeln und den Augengläsern wird die Brücke mittels eines Kunststoffadens an den Augengläsern befestigt. Es sind also auch hier Bohrungen in den Gläsern erforderlich, deren Nachteile bereits genannt sind und die vermieden werden sollen.

Es ist zwar auch vorgeschlagen worden, (s. US-A-1 358 200), den Spanndraht ganz um das Brillenglas zu legen und die Drahtenden einzuspannen. Dabei ist der Draht um das Brillenglas in einer Nut gelegt ; das eine Ende des Drahtes ist in die Nasenbrücke eingehängt, während das andere Ende mittels einer Schraube an der Nasenbrücke verklemmt wird. Diese Lösung scheint aber nicht zu stabilen Verhältnissen zu führen, weshalb die Fachwelt diesen Lösungsweg offenbar nicht weiterverfolgt hat und auch bisher keine zufriedenstellende Lösung gefunden hat.

Gegenstand der Erfindung ist daher eine randlose Brille, bei der die Brillengläser vollständig mit einem biegsamen Spannfaden oder Spannband umfaßt sind und bei der die Nasenbrücke und die Backenteile Spangen aufweisen, die als Halterungsstege der Brillengläser dienen und die mittels des Spannfadens oder Spannbandes an den Brillengläsern befestigt sind.

Die Erfindung ist durch den kennzeichnenden Teil der Patentanspruchs 1 gekennzeichnet.

Weiterbildungen der Erfindung ergeben sich aus den Patentansprüchen 2-7.

Bei einer ersten Variante der Erfindung können die Enden des Fadens verschweißt oder verlötet werden und zwar direkt an die Backe und die Brücke. Es handelt sich dann um eine fertige Fassung, in die die Gläser eingespannt oder eingezogen werden.

Eine zweite Variante der Erfindung besteht aus zwei Teilen. Erstens dem fertig geschliffenen Glas mit Faden und Metallschlaufen, die Gewindestifte aufweisen. Das Glas kann groß oder klein sein, es muß nur der Faden die entsprechende Länge haben. Auch können die Metallschlaufen backenseitig und nasal völlig frei in der gewünschten Höhe liegen. Eine universelle Verstellbarkeit ist gegeben. Dieses fertig geschliffene Glas wird auf die Backe/Bügel und Brücke gesteckt und verschraubt. Die Metallauflage an der Backe und Brücke entspricht in der Abmessung der bereits am Glas vorhandenen. Sie wird dort aufgesetzt und wird über die Stifte verschraubt. Die Backen- und Brückenaufnahmen haben nach vorne und hinten Krampen, um die Stabilität zu gewährleisten.

Die Erfindung bietet eine Reihe von Vorteilen. So kann die Brille einfach an die Kopf- bzw. Gesichtsform des Brillenträgers angepaßt werden, indem die Nasenbrücke oder die Backenteile durch Schlaufen entsprechend nach oben oder unten verschoben werden. Nach Festziehen der Fadenenden sitzen die Brücke und die Backenteile wieder fest auf den Gläsern.

Die Verschiebbarkeit der Brücke und Backenteile macht die Anpassung der Brille auch praktisch unabhängig von der Randform der Gläser, was wiederum auch die Anpassung an die Gesichtsform erleichtert. Darüberhinaus werden bereits geschliffene Gläser auch für ein anderes Gestell (Bügel)wieder verwendbar, da die vorgegebene Form der Gläser nicht mehr wesentlich bzw. hemmend ist.

Die neue Brille ist aber bei Bifokal-Gläsern besonders vorteilhaft, da die Korrektur der Höhenumstellung der Grenzlinie möglich ist, ohne daß an den Gläsern oder der Brille Nacharbeiten beim Augenoptiker notwendig sind.

Schließlich entfallen bei der neuen Brille auch die Bohrungen in den Gläsern, die bei Phototrop-Gläsern fast unmöglich, zumindest aber nur unter der Gefahr des Brechens der Gläser durchführbar sind. Für den Brillenträger ergibt sich außerdem der angenehme Vorteil, daß er die Glasform praktisch frei nach seinen Wünschen wählen kann und daß keine störenden Bohrungen vorhanden sind.

Als großer Vorteil der zweiten Variante ergibt sich, daß eine Kindergröße wie eine Übergröße mit den gleichen Teilen gefertigt werden kann ; hierzu ist nur die Länge des Fadens bzw. Bandes unterschiedlich lang zu gestalten. Dies ist dadurch möglich, daß jedes Fadenende schlaufenartig durch je zwei Löcher in der bügelseitigen Metallauflage gezogen ist und der Faden durch einfaches Anziehen der beiden Fadenenden verspannt werden kann. Es ist also keine Verlötung oder Verschweißung der Fadenenden erforderlich. Der Augenoptiker muß daher auch nicht wie bei herkömmlichen Brillenfassungen ein Größensortiment auf Lager halten ; er kann aus einer Garnitur jede gewünschte Form oder Größe fertigen, wobei nur die Länge des Spannfadens variiert werden muß.

Weitere Vorteile und Merkmale der Erfindung ergeben sich aus den Unteransprüchen und der folgenden Beschreibung von zwei Ausführungsbeispielen, die anhand der Figuren 1 bis 5 erläutert werden.

Es zeigen

Figuren 1-4 ein erstes Ausführungsbeispiel der Erfindung und zwar

Figur 1   den linken Teil der neuen Brille,

Figur 2   eine Sicht in Richtung des Pfeiles A auf die Brückenspange,

Figur 3   einen Schnitt durch die Brückenspange für ein genormtes Glas,

Figur 4   einen Schnitt durch die Brückenspange für eine Korrektionsbrille,

Figur 5   ein anderes Ausführungsbeispiel der Erfindung.

In dem beschriebenen Beispiel ist der Einfachheit halber nur der rechte Teil der Brille dargestellt. An dem Glas 1 greifen der Backenteil 2 und die Nasenbrücke 3 an, und zwar weisen diese Spangen 4 und 5 auf, die die Gläser auf einem kurzen Stück als Halterungsstege umfassen.

Der Faden 6 ist in der Nut 7 des Glases 1 um den gesamten Umfang des Glases geführt. Zum Verspannen des Fadens 6 und zur Halterung der Spangen 4 und 5 ist der Faden schlaufenartig durch die Spangen gezogen, wie mit 8 und 9 angedeutet ist. Die Enden des Fadens 6 sind an den beiden Backenteilen 2 in geeigneter Weise befestigt. Durch Verbinden der beiden Backenteile, z. B. durch Verschrauben, kann dann der Faden 6 so verspannt werden, daß die Spangen 4 und 5 fest auf dem Glas 1 sitzen und der Brille die notwendige Festigkeit geben.

Wenn die Backe 2 einteilig ist, können die Enden des Fadens 6 direkt miteinander unter Spannung des Fadens verbunden, z. B. verlötet oder verschweißt werden. Die Art der Verbindung hängt im wesentlichen nur von dem verwendeten Material für den Faden ab. Anstelle des Fadens kann auch ein Spannband verwendet werden.

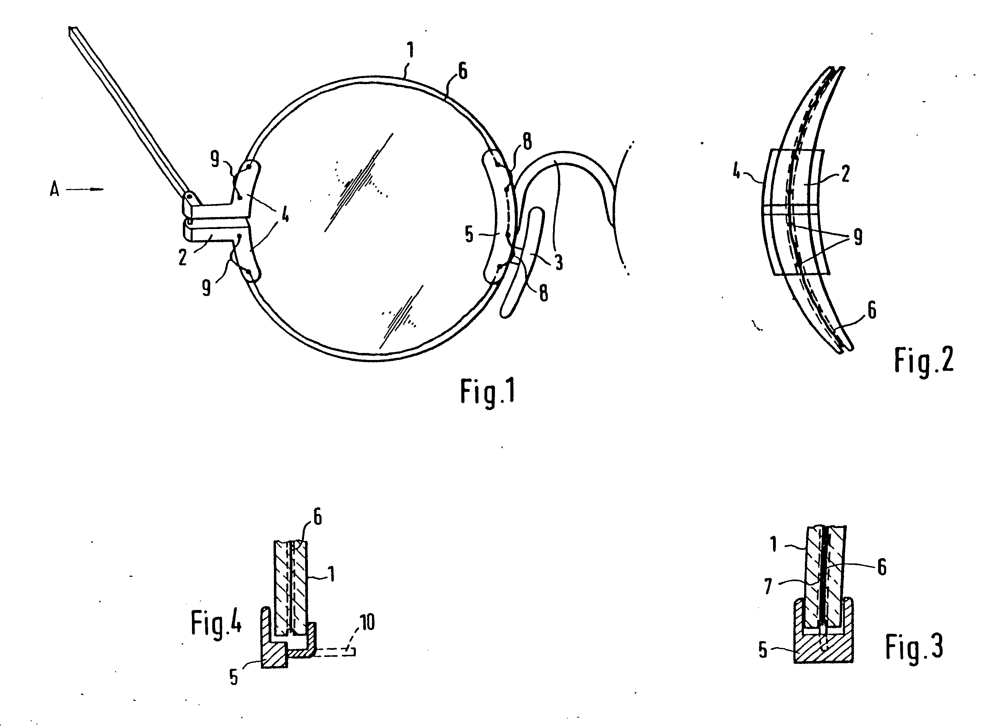

Fig. 2 veranschaulicht die schlaufenartige Führung 9 des Fadens 6 in der Backenspange 4.

Fig. 3 zeigt in einem Schnitt wie die Spangen 4 und 5 das Glas 1 umfassen.

Fig. 4 zeigt eine Ausführungsform, bei der die Spangen an verschiedene Glasdicken angepaßt werden können. Wie man erkennt, umfassen die Spangen nur die eine Seite des Glases ; zur Anpassung an verschiedene Glasdicken sind an den Spangen eine oder mehrere Krampen 10 angebracht, die so umgebogen werden können, daß die Spangen fest auf dem Glas sitzen.

Da die Spangen 4 und 5 vor dem Verspannen lose auf den Brillengläser 1 sitzen, können sie auch leicht in beiden Richtungen am Umfang der Gläser verschoben werden, womit eine sehr einfache Anpassung der Brille an die Kopfform möglich ist. Auch lassen sich die neuen Brillengestelle für Gläser aus anderen Fassungen, die bereits eine vorgegebene Form haben, wiederverwenden, da die Anpassung praktisch unbegrenzt möglich ist und auch Höhenumstellungen leicht durchgeführt werden können.

Die letztere Korrekturmöglichkeit ist insbesondere beim Anpassen von Bifokalgläsern von großer Bedeutung, da die Nahteilhöhe auch nachträglich je nach Bedürfnis des Brillenträgers verändert werden kann.

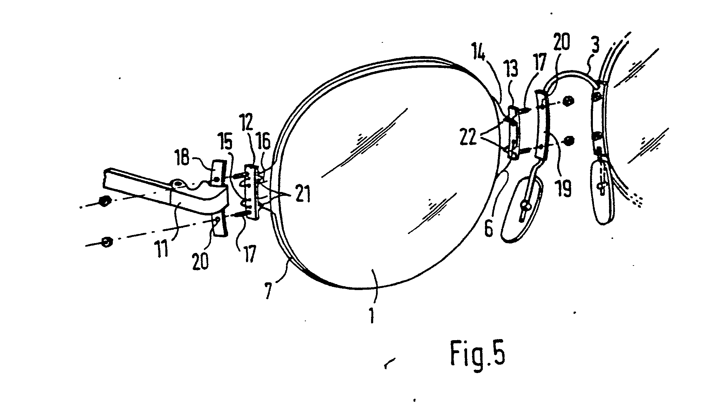

In dem beschriebenen zweiten Beispiel gemäß Fig. 5 ist der Einfachheit halber nur der rechte Teil der Brille dargestellt. An dem Glas 1 greifen der Brillenbügel 11 und die Nasenbrücke 3 an, und zwar weisen diese Metallauflagen 12 und 13 auf, die die Gläser auf einem kurzen Stück als Halterungsstege umfassen.

Der Faden 6 ist in der Nut 7 des Glases 1 um den gesamten Umfang des Glases geführt. Zum Verspannen des Fadens 6 und zur Halterung der Metallauflagen 12 und 13 ist der Faden schlaufenartig durch diese gezogen, und zwar weist die Metallauflage 13 eine Schlaufe 14 auf, während die Metallauflage 12 zweimal schlaufenartig in den Faden 6 eingefädelt ist, wie durch die Bezugszeichen 15 und 16 angedeutet ist. Die Metallauflage 12 hat also zwei Lochpaare. Die Fadenenden werden jeweils durch eine Lochpaar gezogen ; durch Anziehen der Fadenenden kann der Faden 6 verspannt werden. Zur Verdeutlichung sind die Fadenenden herausgeführt, die im Endzustand natürlich zwischen Metallauflage und Brillenglas liegen.

Die Metallauflagen 12 und 13 weisen Gewindestifte 17 auf ; an dem Brillenbügel 11 und der Nasenbrücke 3 sind mit den Metallauflagen 12 und 13 korrespondierende Stege 18 und 19 vorgesehen, die Löcher 20 aufweisen, durch die die Gewindestifte 17 zum Zwecke des Verbindens von Brillenbügeln und Nasenbrücke mit den Brillengläsern hindurchgeführt und verschraubt werden.

Da die Metallauflagen 12 und 13 vor dem Verspannen lose auf den Brillengläser 1 sitzen, können sie auch leicht in beiden Richtungen am Umfang der Gläser verschoben werden, womit eine sehr einfache Anpassung der Brille an die Kopfform möglich ist. Zum besseren Halt sind an den Metallauflagen 12 und 13 Krampen angebracht, wie durch die Bezugszeichen 21 und 22 angedeutet ist.

## Patentansprüche

1. Randlose Brille, bei der die Brillengläser (1) vollständig mit einem biegsamen Spannfaden (6) oder Spannband umfaßt sind und bei der die Nasenbrücke (3) und die Bakkenteile (2) Spangen aufweisen, die als Halterungsstege der Brillengläser dienen und die mittels des Spannfadens oder Spannbandes an den Brillengläsern befestigt sind, dadurch gekennzeichnet, daß die Spangen als Metallauflagen (4, 5) ausgebildet sind, daß die nasenseitige Metallauflage (5) ein Paar von Löchern oberhalb und ein Paar von Löchern unterhalb der Nasenbrücke (3) aufweist, durch welche der Spannfaden (6) in zwei Schlaufen (8) geführt ist, und daß die backenseitige Metallauflage (4) ebenfalls zwei Paar Löcher aufweist, wobei jedes der beiden freien Enden des Spannfadens (6) durch ein Lochpaar in einer Schlaufe (9) geführt ist und im montierten Zustand zwischen Metallauflage (4) und Brillenglas (1) liegt, und daß die Spangen (4, 5) Krampen (10) aufweisen, die durch Umbiegen das Brillenglas (1) umfassen und halten.

2. Brille nach Anspruch 1, dadurch gekennzeichnet, daß die Enden des Fadens oder Bandes an den Backen (2) befestigt sind.

3. Brille nach Anspruch 1, dadurch gekennzeichnet, daß die Enden des Fadens (6) miteinander verbunden sind.

4. Brille nach Anspruch 1 und 3, dadurch gekennzeichnet, daß die Enden des Fadens (6) miteinander verlötet sind.

5. Brille nach Anspruch 1 und 3, dadurch gekennzeichnet, daß die Enden des Fadens (6) miteinander verschweißt sind.

6. Brille nach Anspruch 1 und 2, dadurch gekennzeichnet, daß die Backen (2) zweiteilig sind und je ein Ende des Fadens (6) oder Bandes mit einer Teilspange (4) verbunden ist und daß die beiden Teilspangen durch Verschrauben oder dergl. miteinander verspannbar sind (Fig. 1).

7. Randlose Brille nach Anspruch 1, dadurch gekennzeichnet, daß an den Metallauflagen (12, 13) Gewindestifte (17) vorgesehen sind, die mit Löchern (20) in den Metallstegen (18, 19) korrespondieren, die an den Brillenbügeln (11) bzw. der Nasenbrücke (3) befestigt sind (Fig. 5).

## Claims

1. Rimless spectacles wherein each of the lenses (1) is completely surrounded with a flexible thread (6) or strap, and wherein the bridge (3) and the end pieces (2) of the temples have clamps which serve as holding elements for the lenses and are fastend to the lenses by means of the thread or strap, characterized in that the clamps are designed as metal supports (4, 5), that the metal support (5) on the nose side has a pair of holes above the bridge (3) and a pair of holes below the bridge (3) through which the thread (6) runs in two loops (8), and that the metal support (4) on the cheek side has two pairs of holes, with each of the two free ends of the thread (6) passed through one pair of holes in a loop (9) and lying, in the assembled condition, between the metal support (4) and the lens (1), and that the clamps (4, 5) have cramps (10) which are bent to clasp and hold the lens (1).

2. Spectacles as claimed in claim 1, characterized in that the ends of the thread or strap are attached to the end pieces (2).

3. Spectacles as claimed in claim 1, characterized in that the ends of the thread (6) are joined together.

4. Spectacles as claimed in claims 1 and 3, characterized in that the ends of the thread (6) are soldered together.

5. Spectacles as claimed in claims 1 and 3, characterized in that the ends of the thread (6) are welded together.

6. Spectacles as claimed in claims 1 and 2, characterized in that the end pieces (2) are of two-part construction, that each end of the thread (6) or strap is connected with one of the two parts of the clamp (4), and that the two parts of the clamp can be braced relative to each other by means of screws or the like (Fig. 1).

7. Rimless spectacles as claimed in claim 1, characterized in that the metal supports (12, 13) are provided with threaded studs (17) for insertion into corresponding holes (20) in the metal crosspieces (18, 19) attached to the temples (11) and the bridge (3), respectively (Fig. 5).

## Revendications

1. Lunettes sans monture, sur lesquelles les verres (1) sont entourés complètement d'un fil tendeur (6) souple ou d'un ruban de serrage; l'appui-nez (3) et les armatures côté pommettes (2) comprenant des boucles servant d'attaches aux verres et qui sont fixées sur les verres moyennant le fil tendeur ou le ruban de serrage, caractérisées par le fait que les boucles sont conçues comme supports métalliques (4, 5), que le support côté nez (5) est muni de trous au-dessus et d'une paire de trous en dessous de l'appui-nez (3) par lesquels passe le fil (6) en deux nœuds coulants (8) et que le support côté pommette (4) est également muni de deux paires de trous, chacune des deux extrémités libres du fil tendeur (6) passant par une paire de trous en un nœud coulant (9) et se trouvent, à l'état monté, entre le support (4) et le verre (1), et que les attaches (4, 5) sont munies de pattes (10) qui, après les avoir repliées, bordent et tiennent le verre (1).

2. Lunettes selon revendication 1, caractérisées par le fait que les extrémités du fil ou du ruban sont fixées sur les armatures côté pommettes.

3. Lunettes selon revendication 1, caractérisées par le fait que les extrémités du fil (6) sont reliées ensemble.

4. Lunettes selon revendications 1 et 3, caractérisées par le fait que les extrémités du fil (6) sont brasées ensemble.

5. Lunettes selon revendications 1 et 3, caractérisées par le fait que les extrémités du fil (6) sont soudées ensemble.

6. Lunettes selon revendications 1 et 2, caractérisées par le fait que les armatures côté pommettes (2) consistent en 2 pièces et qu'une extrémité de chaque fil (6) ou ruban est reliée à une attache (4) et que les deux attaches peuvent être tendues l'une par rapport à l'autre par vissage ou autre (fig. 1).

7. Lunettes sans monture selon revendication 1, caractérisées par le fait que des vis sans tête (17) sont prévues sur les supports métalliques (12, 13) coïncidant avec les trous (20) sur les arcades métalliques (18, 19) fixées sur les branches (11) et l'appui-nez (3) des lunettes (fig. 5).

Fig.1

Fig.2

Fig.4

Fig.3

0 081 179

Fig.5